# FASCICULE DE BREVET EUROPEEN

(11) **EP 1 167 091 B1**
(45) Date de publication et mention de la délivrance du brevet: **07.05.2003**
(21) Numéro de dépôt: 01114790.7
(22) Date de dépôt: 26.06.2001
(51) Int. Cl.: B60C 27/12

(54) **Chaine antidérapante apte à s'adapter à la périphérie d'un pneumatique d'un véhicule**
Gleitschutzkette für Fahrzeugreifen
Anti-skid tyre chain for a vehicle tyre

(30) Priorité: 28.06.2000 FR 0008360
(43) Date de publication de la demande: 02.01.2002
(73) Titulaire: Siepa France S.A., 06510 Carros (FR)
(72) Inventeur: Lallement, Olivier, Cabinet Hautier, 24 rue Masséna, 06000 Nice (FR)
(74) Mandataire: Hautier, Jean-Louis

(56) Documents cités:
- US-A- 2 207 971
- PATENT ABSTRACTS OF JAPAN vol. 1998, no. 11, 30 septembre 1998 (1998-09-30) & JP 10 151925 A (OKAMOTO IND INC), 9 juin 1998 (1998-06-09)

## Description

La présente invention concerne une chaîne antidérapante apte à s'adapter à la périphérie d'un pneumatique d'un véhicule.

Cette invention trouvera particulièrement son application dans le domaine de la fabrication et de l'utilisation de chaînes particulièrement destinées à la conduite automobile par temps neigeux.

On connaît déjà différentes technologies de chaînes antidérapantes qui ne donnent pas entière satisfaction.

*Dans ce cadre, le document DE-A-4039665 divulgue des chaînes pour véhicules automobiles recouvrant une partie de la périphérie des pneumatiques et présentant une chaînette de réglage qui se termine par un crochet insérable dans un maillon de la chaîne. Un ressort est placé en bout de la chaînette pour assurer la mise sous tension.*

Un tel dispositif a l'intérêt de comporter un organe élastique de mise en tension de la chaînette. Cependant, il a l'inconvénient de laisser une incertitude quant à la bonne tension de la chaîne. Aucun moyen de vérification n'est offert pour s'assurer que la tension est suffisante.

Par ailleurs, ce document prévoit l'emploi d'un ressort métallique qui n'exclut pas les risques de pincement lors du montage et du démontage ainsi que la corrosion.

De plus, la formation d'un seul ressort est d'une efficacité médiocre en ce qui concerne la tension.

*On connaît également du document EP-A-0385057 une chaîne antidérapante apte à s'adapter à la périphérie d'un pneumatique d'un véhicule. Sa fixation latérale extérieure comporte un tronçon de fixation, pourvu d'au moins un organe extensible élastique intercalé, raccordé à Tune de ses extrémités à une chaîne de tension et pourvu, à son autre extrémité, d'un dispositif d'arrêt destiné à la chaîne de tension.*

Selon ce document, un ou plusieurs organes extensibles sont formés sur le pourtour du pneumatique ce qui les rend difficiles à tendre car il faut tirer fortement sur la chaîne qui frotte elle-même sur le pneumatique.

De plus, un seul point d'accrochage en bout de la chaînette est présenté.

Aussi bien dans le document DE-A-4039665 que dans EP-A-0385057, l'extrémité de la chaînette est accrochée à un seul emplacement sur le pourtour de la chaîne. Cet accrochage unique n'est pas satisfaisant dans la mesure où une possibilité importante de déplacement latéral de la chaînette subsiste. Il n'est donc pas rare de constater un relâchement de la tension ou pour le moins un maintien insuffisamment ferme de la chaînette sur la chaîne.

On connaît par ailleurs du document US-A-2 207 971 une chaîne pour véhicule automobile équipée d'une chaînette à mettre en tension et d'un dispositif élastique à cet effet. Ce dispositif comporte deux ressorts de traction dont une extrémité est fixée à un anneau établissant une jonction avec la chaînette. Leur autre extrémité est fixée à d'autres points de la chaîne. Bien que disposant de plusieurs ressorts de tension de la chaînette, ce document montre uniquement un dispositif rudimentaire de jonction de la chaînette et des ressorts et n'offre aucune protection de ressorts, en particulier en cas de non utilisation.

La présente invention permet de remédier aux inconvénients des techniques actuelles.

En premier lieu, elle propose la formation d'au moins deux éléments de mise sous tension suivant deux cordes de la roue.

On forme ainsi deux ancrages qui sont synonymes de meilleure fixation et d'une plus grande sécurité lors du roulement du véhicule.

Par ailleurs, la répartition de l'effort de tension est plus importante ce qui permet d'éviter tout desserrage intempestif.

Un autre avantage de l'invention est de permettre le contrôle de la bonne tension. Pour ce faire, des témoins visuels sont proposés pour que l'utilisateur puisse aisément vérifier qu'il a tendu suffisamment les moyens de tension.

Cet élément de vérification est particulièrement important pour des raisons de sécurité ou de dégradation des chaînes.

Un autre avantage de l'invention est qu'elle présente une pièce de fixation des éléments de tension sous forme d'un boîtier qui facilite le montage et autorise éventuellement un remplacement de l'ensemble de mise sous tension à l'extrémité de la chaîne en cas de casse.

Qui plus est, ce système autorise la fixation de plusieurs moyens de tension à l'extrémité de la chaînette par le biais d'un seul point de fixation à cette extrémité.

Il s'ensuit une fabrication moins longue et moins coûteuse pour cette réalisation.

D'autres buts et avantages apparaîtront au cours de la description qui suit, qui n'est, cependant, donnée qu'à titre indicatif.

La présente invention concerne une chaîne antidérapante comprenant les caractéristiques de la revendication indépendante 1.

L'invention pourra se présenter sous les modes de réalisation introduit ci-après
- Chaque tendeur présente au moins un témoin visuel positionné à un niveau de la longueur du tendeur ajusté de sorte que :
   - Il se situe dans le tunnel lorsque le tendeur est au repos,
   - Il se situe hors du tunnel lorsque l'effort de traction appliqué au tendeur dépasse une valeur prédéterminée.
- Le boîtier est constitué de deux demi-coques assemblées.
- Les moyens d'accrochage de chaque tendeur comportent :
   - Un logement de fixation de l'extrémité libre du tendeur
   - Au moins une patte pour l'accrochage sur la fixation latérale extérieure.
- La longueur cumulée du tunnel et du logement de réservation correspondant à un tendeur équivaut à celle du tendeur.
- Elle comprend deux tendeurs et leurs tunnels font un angle de 10 à 30°

Les dessins ci-joints sont donnés à titre d'exemples indicatifs et non limitatifs. Ils représentent un mode de réalisation préféré selon l'invention. Ils permettront de comprendre aisément l'invention.

La figure 1 montre une vue latérale d'un pneumatique équipé d'une chaîne antidérapante selon l'invention.

La figure 2 est une vue en coupe longitudinale d'un mode particulier de réalisation des moyens de mise en tension.

La figure 3 est une vue de côté du mode de réalisation de la figure 2.

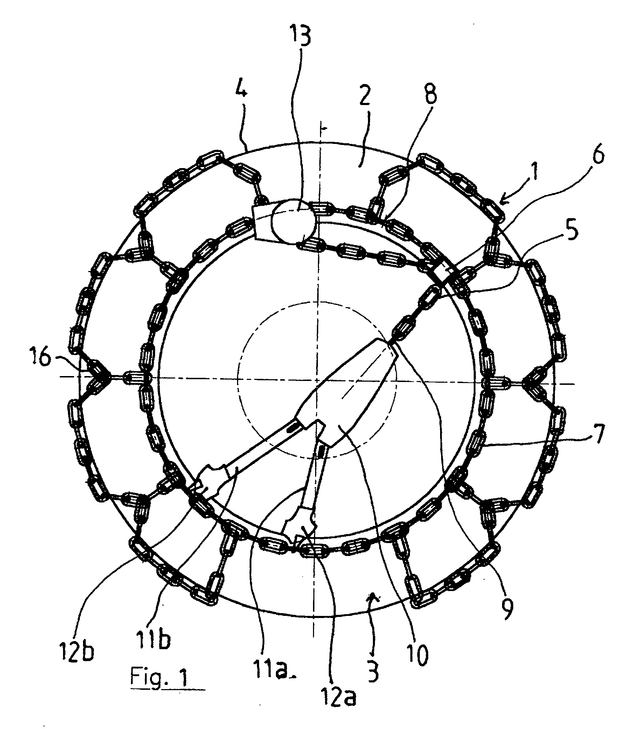

En se référant à la figure 1, on constate que la chaîne 1 selon l'invention comprend une pluralité d'éléments de chaîne aptent à recouvrir au moins partiellement la surface de roulement 4 du pneumatique 2. Cette configuration est illustrée à la figure 1 sous forme d'une vue latérale du pneumatique ainsi équipé tel qu'il est visible du côté extérieur du pneumatique.

On entend par partie intérieure du pneumatique celle qui se situe du côté de la carrosserie du véhicule équipé, et par partie extérieure du pneumatique 2, la partie qui se situe du côté opposé à la partie intérieure et qui est donc visible par un observateur placé à côté du véhicule.

De façon connue, une fixation latérale intérieure est formée de façon à circonscrire sensiblement la périphérie intérieure du pneumatique.

De façon similaire, une fixation latérale extérieure 7 est formée sous forme de maillon de la chaîne 1.

La fixation latérale extérieure 7 peut être une simple chaîne comme c'est le cas de la figure 1 mais cette configuration n'est pas limitative.

Ainsi, d'autres moyens pourront constituer la fixation 7, essentiellement sur le flanc du pneumatique 2.

Pour réaliser la fixation de la chaîne 1, l'extrémité de la fixation latérale extérieure 7 est raccordée à une chaînette 5 également visible en figure 1.

L'autre extrémité 9 de la chaînette est raccordée à des moyens de mise en tension.

On peut ainsi tendre la fixation latérale extérieure de façon à ce que l'ensemble de la chaîne antidérapante 1 s'appuie efficacement sur le pourtour du pneumatique 2.

L'invention a la caractéristique de proposer des moyens spécifiques de mise en tension de la chaînette 5.

A cet effet, comme on le repère également en figure 1 ces moyens de mise en tension comportent au moins deux tendeurs 11a 11b raccordés à la seconde extrémité 9 à la chaînette 5.

Du côté opposé des moyens de mise en tension, chaque tendeur 11a 11b est accroché par son extrémité libre 25a 25b à des endroits distincts de la fixation latérale extérieure 7.

Des moyens d'accrochage 12a 12b sont présents à ce niveau.

De façon préférée, les tendeurs 11a 11b sont au nombre de deux et sont soit parallèles soit écartés selon un angle variable par exemple 10 à 90°. De cette façon, ils s'appliquent à deux endroits distincts de la fixation latérale extérieure 7 suffisamment éloignés pour maintenir efficacement en position la chaînette tant sur le plan longitudinal des tendeurs que sur le plan latéral.

On pourra utiliser tout type de tendeur actuellement connu et notamment des tendeurs formés en une matière élastique naturelle telle du caoutchouc ou synthétique.

De façon préférée, un boîtier 10 est présent au niveau des moyens de mise en tension pour assurer la fixation des tendeurs 11a 11b à leur première extrémité et, éventuellement, pour les renfermés en position de non-utilisation.

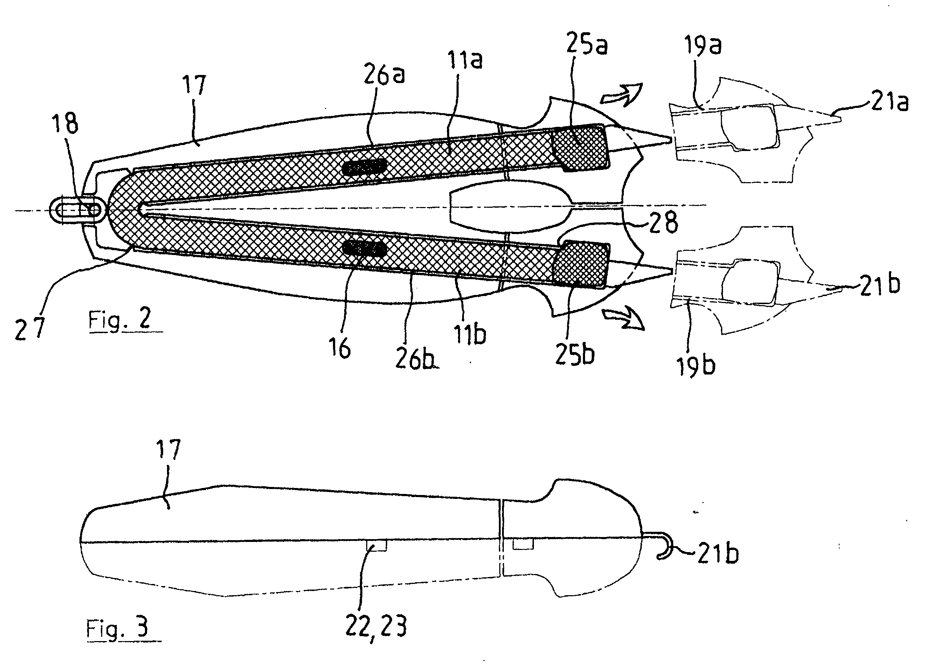

A cet effet, le boîtier 10 dont un exemple de réalisation est montré en figure 2 comprend des moyens de fixation de la seconde extrémité 9 de la chaînette 5 et des moyens de fixation des tendeurs 11a 11b.

Comme illustré en figure 2, les moyens de fixation de la seconde extrémité 9 de la chaînette 5 pourront être formés par une simple goupille ou un plot de fixation 18 traversant latéralement le boîtier 10.

En ce qui concerne la fixation des tendeurs, elle pourra être formée d'un rétrécissement 27 à l'intérieur du boîtier 10 permettant de maintenir en position l'extrémité de chaque tendeur 11a 11b, cette extrémité étant réalisée de façon à présenter une dimension plus importante que le reste du tendeur 11a 11b. En particulier, il suffira de replier l'extrémité de chaque tendeur 11a 11b et de la fixer dans cette position pour former un bout de tendeur d'une dimension suffisante pour être maintenue dans le boîtier 10 par le rétrécissement 27.

Avantageusement, le boîtier 10 a pour fonction de renfermer les tendeurs 11a 11b lorsque la chaîne antidérapante 1 n'est pas utilisée. Qui plus est, le boîtier 10 constituera un élément de guidage pour le déplacement élastique de chaque tendeur 11a 11b.

A titre indicatif, les tunnels (26a, 26b) peuvent former un angle de 10 à 30°.

A cet effet, le boîtier 10 comporte pour chaque tendeur 11a 11b un tunnel repéré 26a 26b en figure 2.

Chaque tunnel s'étend suivant la direction de déformation élastique d'un tendeur 11a 11b.

Afin d'assurer l'utilisateur d'une bonne tension de chaque tendeur 11a 11b, ceux-ci pourront présenter un témoin visuel apparaissant au repère 16 en figure 1.

Ce repère 16 est positionné à un niveau adéquat de chaque tendeur 11a 11b de façon à ce qu'il se situe dans le tunnel 26a 26b lorsque le tendeur 11a 11b est au repos et qu'il ne soit pas visible par l'utilisateur dans cette configuration.

Par contre, lorsque la tension atteinte est suffisante, le témoin 16 doit apparaître à l'utilisateur en sortie du boîtier 10. A cet effet, chaque témoin visuel 16 est positionné sur la longueur du tendeur 11a 11b de façon à ce que le déplacement nécessaire à sa sortie du boîtier 10 corresponde à un effort de tension suffisant pour la bonne fixation de la chaîne 1.

A titre préféré, les tendeurs 11a 11b sont formés de façon totalement indépendante. Leur nombre n'est par ailleurs pas forcément limité à deux. Cependant; on pourra envisager d'autre mode de réalisation et notamment les deux tendeurs 11a 11b pourraient être formés d'un seul tenant sous forme d'un tendeur de grande dimension replié à l'intérieur du boîtier et dont les extrémités libres correspondraient aux extrémités nécessaires à l'accrochage sur la fixation latérale extérieure 7.

Les deux tendeurs 11a,11b sont ainsi formés d'un seul tenant, comme dans le cas de la figure 2 qui illustre cependant aussi la formation de rétrécissement 27 pour deux tendeurs formés distinctement.

La figure 2 montre un exemple préféré de réalisation du boîtier 10. A ce sujet, celui-ci pourra être constitué en deux demi-coques 17 assemblées. La figure 2 illustre particulièrement l'une de ces demi-coques.

L'assemblage des demi-coques pourra être effectué par tout moyen courant et notamment par un système de fente 23 et de languette 22 coopérant.

Des trous d'assemblage pourront par ailleurs être formés pour recevoir des vis et finaliser le montage solidaire des deux demi-coques 17.

La figure 2 montre également un mode de réalisation préféré des moyens d'accrochage 12a 12b.

A ce sujet, ces moyens d'accrochage pourront comprendre un logement 19a 19b pour la fixation de l'extrémité libre 25a 25b de chaque tendeur 11a 11b.

De façon similaire à la fixation des tendeurs 11a 11b dans le boîtier 10, l'encastrement de l'extrémité libre 26a 26b pourra être réalisé par un rétrécissement 28 maintenant en position l'extrémité évasée 25a 25b.

Qui plus est, les moyens d'accrochage 12a 12b pourront comporter une patte 21a 21b apte à réaliser l'accrochage sur la fixation latérale extérieure 7.

Une patte repliée comme illustrée en figure 3 pourra être réalisée.

De façon préférée, la longueur cumulée d'un tunnel 26a 26b et d'un logement 19a 19b équivaut à celle du tendeur correspondant 11a 11b. De cette façon, lorsque la chaîne 1 est en position inutilisée, le tendeur est parfaitement protégé et enfermé dans les moyens de mise en tension.

On décrit ci-après un mode préféré d'utilisation de la chaîne antidérapante présentée.

Dans un premier temps, on met en place, de façon connue en soi, la fixation latérale intérieure à l'arrière du pneumatique 2.

Il est ensuite possible de recouvrir la surface de roulement 4 du pneumatique 2 par la chaîne 1.

La fixation latérale extérieure est alors amenée dans sa position quasi-définitive.

A cet instant, on peut mettre sous-tension la chaîne par l'intermédiaire d'une action sur la chaînette 5.

A cet effet, la chaînette 5 est reliée à la fixation latérale extérieure 7 par tout moyen courant. Par ailleurs, une poulie à cliquet 13 évite le déserrage intempestif de la chaînette au cours de sa mise sous tension. Un ou plusieurs crochet 6 assure le renvoi d'angle de la chaînette 5 pour qu'elle se positionne sensiblement suivant un diamètre du pneumatique 2.

Lorsque la chaînette 5 est dans cette position, il est possible de tendre simultanément ou successivement chaque tendeur 11a 11b et de les fixer par le biais des moyens d'accrochage 12a 12b sur la fixation latérale extérieure 7.

Cet accrochage s'effectue à plusieurs endroits de la fixation latérale extérieure 7 ce qui permet une meilleure solidarisation.

De plus, la multiplication du nombre de tendeurs 11a 11b augmente l'effort de tension appliqué à la chaînette 5.

L'utilisateur peut facilement vérifier que la chaînette 5 ainsi positionnée est suffisamment tendue. A cet effet, des témoins visuels 16 apparaissent en dehors du boîtier 10 lorsque les tendeurs 11a 11b sont suffisamment tendus.

Si ces témoins n'apparaissent pas, l'utilisateur peut augmenter la tension appliquée à la chaînette 5.

### REFERENCES

- 1.: Chaîne antidérapante
- 2.: Pneumatique
- 3.: Flanc extérieur
- 4.: Surface de roulement
- 5.: Chaînette
- 6.: Crochet
- 7.: Fixation latérale extérieure
- 8.: Première extrémité
- 9.: Seconde extrémité
- 10.: Boîtier
- 11a 11b.: Tendeurs
- 12a 12b.: Moyens d'accrochage
- 13.: Poulie à cliquet
- 16.: Témoin
- 17.: Demi-coque
- 18.: Plot de fixation
- 19a 19b.: Logements
- 21a 21b.: patte
- 22.: Languette
- 23.: Fente
- 25a 25b.: Extrémité libre
- 26a 26b.: Tunnel
- 27.: Rétrécissement
- 28.: Rétrécissement

## Revendications

1. Chaîne antidérapante (1) apte à s'adapter à la périphérie d'un pneumatique (2) d'un véhicule en recouvrant une partie de sa surface de roulement (4), comportant une fixation latérale extérieure (7), une fixation latérale intérieure et des moyens de mise en tension d'une chaînette (5) dont la première extrémité (8) est raccordée à la fixation latérale extérieure (7), les moyens de mise en tension comportant au moins deux tendeurs (11a, 11b) raccordés à la seconde extrémité (9) de la chaînette (5) et aptes à être accrochés, sous tension, par leur extrémité libre(25a, 25b) à des endroits distincts de la fixation latérale extérieure (7) par des moyens d'accrochage (12a, 12b),
**caractérisée par le fait**
**que** les moyens de mise en tension comprennent un boîtier (10) doté
- de moyens de fixation de la seconde extrémité (9) de la chaînette (5)
- de moyens de fixation des tendeurs (11a, 11b)
- et, pour recevoir chaque tendeur (11a, 11b), de tunnels (26a, 26b) s'étendant chacun suivant la direction de déformation élastique d'un tendeur (11a, 11b).

2. Chaîne antidérapante (1) selon la revendication 1, **caractérisée par le fait**
**que** chaque tendeur (11a, 11b) présente au moins un témoin visuel (16) positionné à un niveau de la longueur du tendeur ajusté de sorte que :
- il se situe dans le tunnel (26a, 26b) lorsque le tendeur (11a, 11b)est au repos,
- il se situe hors du tunnel (26a, 26b) lorsque l'effort de traction appliqué au tendeur (11a, 11b) dépasse une valeur prédéterminée.

3. Chaîne antidérapante (1) selon la revendication 1 ou la revendication 2,
**caractérisée par le fait**
**que** le boîtier (10) est constitué de deux demi-coques (17) assemblées.

4. Chaîne antidérapante (1) selon l'une quelconque des revendications 1 à 3,
**caractérisée par le fait**
**que** les moyens d'accrochage (12a, 12b) de chaque tendeur (11a, 11b) comportent :
- un logement (19a, 19b) de fixation de l'extrémité libre (25a, 25b) du tendeur (11a, 11b)
- au moins une patte (21a, 21b) pour l'accrochage sur la fixation latérale extérieure (7).

5. Chaîne antidérapante (1) selon la revendication 4, **caractérisée par le fait**
**que** la longueur cumulée du tunnel (26a, 26b) et du logement (19a, 19b) correspondant à un tendeur (11a, 11b) équivaut à celle du tendeur (11a, 11b).

6. Chaîne antidérapante (1) selon l'une quelconque des revendications 1 à 5,
**caractérisée par le fait**
**qu'**elle comprend deux tendeurs (11a, 11b) et que leurs tunnels (26a, 26b) font un angle de 10 à 30°.

## Claims

1. Anti-skid chain (1) capable of adapting around a vehicle tyre (2) by covering part of its tread (4), comprising an outer lateral fixing means (7), an inner lateral fixing means and means for tightening a small chain (5) whose first end (8) is connected to outer lateral fixing means (7), the means for tightening consisting of at least two chain tensioners (11a, 11b) connected to the second end (9) of chain (5) and capable of being attached, when tight, by their free end (2a, 25b), at different locations on the outer lateral fixing means (7), by hooking means (12a, 12b), **characterized in that**
the means for developing the tension consists of a box (10) with:
- means for securing the second end (9) of the small chain (5)
- means for securing the tensioners (11a, 11b)
- and, to receive each tensioner (11a, 11b), sheaths (26a, 26b), each one extending in the direction of the elastic deformation of one tensioner (11a, 11b).

2. Anti-skid chain according to claim 1, **characterized in that**
each tensioner (11a, 11b) presents at least one visual indicator (16) positioned at a level of the length of the tensioner adjusted so that:
- it is situated in the sheath (26a, 26b) when the tensioner (11a, 11b) is at rest,
- it is situated outside sheath (26a, 26b) when the tensioning force applied to tensioner (11a, 11b) exceeds a predetermined value.

3. Anti-skid chain according to claim 1 or claim 2, **characterized in that** box (10) consists of two assembled half shells (17).

4. Anti-skid chain according to any of claims 1 to 3, **characterized in that** hooking means (12a, 12b) of each tensioner (11a, 11b) comprises:
- a housing (19a, 19b) for fixing the free end (25a, 25b) of tensioner (11a, 11b)
- at least one hook (21a, 21b) for attaching on the outer lateral fixing means (7).

5. Anti-skid chain (1) according to claim 4. **characterized in that**
the cumulated length of sheath (26a, 26b) and housing (19a, 19b) corresponding to a tensioner (11a, 11b) is the same as that of tensioner (11a, 11b).

6. Anti-skid chain according to any of claims 1 to 5, **characterized in that**
it includes two tensioners (11a, 11b) and that their sheaths (26a, 26b) make an angle of 10 to 30°.

## Patentansprüche

1. Gleitschutzkette (1), die sich auf den Umfang eines Fahrzeugreifens (2) einstellen lässt und dessen Lauffläche (4) teilweise bedeckt, mit einer externen seitlichen Befestigung (7) und einer internen seitlichen Befestigung sowie Spannvorrichtungen für eine Kette (5), deren erstes Ende (8) mit der externen seitlichen Befestigung (7) verbunden ist, wobei die Spannvorrichtungen mindestens zwei Spanner (11a, 11b) besitzen, die mit dem zweiten Ende (9) der Kette (5) verbunden sind und deren freie Enden (25a, 25b) mit Hilfe von Hakenelementen (12a, 12b) an bestimmten Stellen der externen seitlichen Befestigung (7) unter Spannung eingehängt werden können, **gekennzeichnet dadurch,**
**daß** die Spannvorrichtungen ein Gehäuse (10) besitzen, das mit :
- Befestigungselementen für das zweite Ende (9) der Kette (5),
- Befestigungselementen der Spanner (11a, 11b) und
- Tunneln (26a, 26b) zur Aufnahme der Spanner (11a, 11b) in Richtung der elastischen Verformung des jeweiligen Spanners (11a, 11b) ausgerüstet ist.

2. Gleitschutzkette (1) gemäß Anspruch 1, **gekennzeichnet dadurch, daß** jeder Spanner (11a, 11b) mindestens eine Sichtanzeige (16) an einer Stelle auf der Länge des eingestellten Spanners besitzt, die so gewählt wird, daß
- sie sich im Tunnel (26a, 26b) befindet, wenn der Spanner (11a, 11b) in Ruhestellung ist, und
- sich außerhalb des Tunnels (26a, 26b) befindet, wenn die auf den Spanner (11a, 11b) ausgeübte Zugkraft (11a, 11b) einen vorbestimmten Wert überschreitet.

3. Gleitschutzkette (1) gemäß Anspruch 1 oder Anspruch 2, **gekennzeichnet dadurch, daß** das Gehäuse (10) aus zwei zusammengefügten Halbschalen (17) besteht.

4. Gleitschutzkette (1) gemäß einem der Ansprüche 1 bis 3, **gekennzeichnet dadurch, daß** die Hakenelemente (12a, 12b) jedes Spanners (11a, 11b)
- eine Aufnahmemulde (19a, 19b) zur Festlegung des freien Endes (25a, 25b) des Spanners (11a, 11b) und
- mindestens ein Greifelement (21a, 21b) zum Einhängen in die externe seitliche Befestigung (7) besitzen.

5. Gleitschutzkette (1) gemäß Anspruch 4, **gekennzeichnet dadurch, daß** die Gesamtlänge des Tunnels (26a, 26b) plus Aufnahmemulde (19a, 19b) eines Spanners (11a, 11b) gleich der Gesamtlänge des Spanners (11a, 11b) ist.

6. Gleitschutzkette (1) gemäß einem der Ansprüche 1 bis 5, **gekennzeichnet dadurch, daß** sie zwei Spanner (11a, 11b) besitzt und ihre Tunnel (26a, 26b) miteinander einen Winkel zwischen 10° und 30° bilden.
